# EUROPEAN PATENT SPECIFICATION

(11) **EP 0 422 966 B1**
(45) Date of publication and mention of the grant of the patent: **10.05.1995**
(21) Application number: 90311276.1
(22) Date of filing: 15.10.1990
(51) Int. Cl.: H01M 2/12

(54) **Electrochemical cell having a safety vent closure**
Elektrochemische Zelle mit Sicherheitsventilverschluss
Cellule électrochimique à soupape d'échappement de sécurité

(30) Priority: 13.10.1989 US 421440
(43) Date of publication of application: 17.04.1991
(73) Proprietor: EVEREADY BATTERY COMPANY, INC., St. Louis Missouri 63164 (US)
(72) Inventor: Chaney, Earl Jacob, Jr., Medina, OH 44256 (US); O'Hara, Thomas James, Bay Village, OH 44140 (US); Malay, Manuel Rafols, Brunswick, OH 44212 (US); Ayers, Alan Douglas, Westlake, OH 44145 (US)
(74) Representative: Lord, Hilton David

(56) References cited:
- EP-A- 0 490 080
- DE-A- 2 042 417
- DE-B- 1 029 935
- FR-A- 2 601 819
- US-A- 3 555 370
- US-A- 4 075 398
- US-A- 4 296 186
- US-A- 4 592 970
- US-A- 4 855 195
- PATENT ABSTRACTS OF JAPAN, vol. 7, no. 170 (E-189)[1315], 27th July 1983

## Description

The present invention relates to a non-resealable safety vent closure for nonaqueous liquid oxyhalide galvanic cells.

Galvanic cells may generate large quantities of gas under certain conditions, during use of storage, and since many such cells are required to be tightly sealed in order to prevent loss of electrolyte by leakage, high internal gas pressures may develop. Such pressures can cause leakage, bulging or even rupture of the cell's container, especially under abusive conditions such as charging and exposure to a high temperature environment, if not properly vented.

Thus, several different types of resealable pressure relief vent valves have been devised and employed for releasing high internal gas pressures from a sealed galvanic cell. One type of valve that has commonly been used consists basically of a valve member, such as a flat rubber gasket, which is biased into a sealing position over a vent orifice by means of a resilient member, such as a helical spring. The spring is designed to yield at a certain predetermined internal gas pressure, momentarily breaking the seal and allowing the gas to escape through the vent orifice.

US-A-3,664,878 discloses a resealable vent comprising a resilient deformable ball of elastomeric material positioned to overlie a vent orifice in the cell's container. A retainer means positioned over the ball maintains the ball in place over the vent orifice and in contact with a valve seal provided around the peripheral edge portions of the vent orifice, and compresses and deforms the resilient ball into a flattened configuration, thus forming a normally fluid-tight seal between the flattened ball and the valve seal. The resilient ball is capable of undergoing further temporary deformation upon build-up of a predetermined high internal gas pressure in the container so as to momentarily break the seal and allow gas to escape through the vent orifice.

US-A-4,855,195 describes a cell employing a current collector-safety switch member which also employs a safety vent arrangement. The vent arrangement includes a bushing and a vent ball tightly located in the bushing and thereby slightly deforming the walls of the bushing. The bushing includes an upper flange and a distinct wall of substantially uniform thickness.

However, with the continuing development of portable electrically powered devices, such as tape recorders and playback machines, radio transmitters and receivers, and the like, new types of reliable, long service-life cells or batteries have been developed. These provide a long service life by utilising highly reactive anode materials, such as lithium, sodium and the like, in conjunction with high energy density nonaqueous liquid cathode materials and a suitable salt.

It is known that certain materials are capable of acting both as an electrolyte carrier, i.e., as solvent for the electrolyte salt, and also as the active cathode for a nonaqueous electrochemical cell. Thus, the cell comprises an anode, a cathode collector and a cathode-electrolyte, the cathode-electrolyte comprising a solution of an ionically conductive solute dissolved in an active cathode depolariser. The active cathode depolariser typically comprises a liquid oxyhalide of an element of Group V or Group VI of the Periodic Table.

Suitable nonaqueous liquid cathode materials include sulphuryl chloride, thionyl chloride, phosphorus oxychloride, thionyl bromide, chromyl chloride, vanadyl tribromide and selenium oxychloride.

Another class of liquid cathode materials is the halides of elements of Group IV to Group VI of the Periodic Table. Suitable nonaqueous cathode materials include sulphur monochloride, sulphur monobromide, selenium tetrafluoride, selenium monobromide, thiophosphoryl bromide, vanadium pentafluoride, lead tetrachloride, titanium tetrachloride, tin dibromide dichloride and tin tribromide chloride.

The "Periodic Table", as referred to herein, is the Periodic Table of Elements as set forth on the inside back cover of the Handbook of Chemistry and Physics, 63rd Edition, The CRC Press Inc., Boca Raton, Florida, USA, 1982-1983.

It has been found that when employing high energy density liquid cathode materials in nonaqueous cell systems, the cells exhibit higher voltages than cells employing conventional aqueous systems. Thus, fewer cell units are required to operate any particular battery-powered device. In addition, many of the halide and oxyhalide nonaqueous cells display relatively flat discharge voltage-versus-time curves. These cells, then, can be employed to produce batteries that will provide a working voltage closer to a designated cut-off voltage than is practicable with some conventional aqueous systems generally not exhibiting flat discharge voltage-versus-time curves.

However, it would be extremely disadvantageous if, in the use of halide and oxyhalide liquid cathode nonaqueous cells, any of the oxyhalide, halide or their reaction products escaped from the cell. Any escape of liquids and/or gases could cause damage to the device employing the cell or to the surface of a compartment or shelf where the cell was stored. On the other hand, if the seal of the cell is effectively permanently secured, then it is possible that the build-up of internal pressure within the cell, under abuse conditions, would cause the cell's container to rupture, possibly causing property and/or bodily damage.

To prevent rupture of the cell's container resulting from possible internal pressure build-up caused under abusive conditions, it is again necessary to vent the cell at some predetermined pressure. It has been reported that some oxyhalide cells, such as those employing thionyl chloride and/or sulphuryl chloride, should be vented at pressures below about 500 psi (3,450 kPa) and preferably between about 150 and 300 psi (1,030 and 2,070 kPa).

US-A-4,329,405 discloses a safety blow-out vent closure for galvanic cells, such as nonaqueous oxyhalide cells which comprises the employment of a conductive tubular member secured to the cell's housing and surrounding a vent orifice therein. A deformable member is force-fitted in the vent orifice and adapted to be at least partially ejected from the vent orifice upon the build-up of a predetermined internal gas pressure within the cell.

In some applications of this vent, the wall defining the vent orifice in the cover may be subjected to corrosion at the deformable member/wall interface. This could roughen the wall surface, thereby increasing the coefficient of friction between the deformable member and the wall of the vent orifice. Venting of the cell is then likely to occur at unpredictable pressures, and it is possible that venting may be altogether prevented.

To overcome this potential corrosion problem, US-A-4,529,673, discloses the use of a corrosion-resistant liner disposed at the interface of the wall and the force-fitted member, However, during storage and discharge, some electrolyte may, at times, leak at the interface of the wall defining the vent orifice and the corrosion-resistant liner.

Accordingly, US-A-4,592,970 discloses the use of a sealant at the interface of the wall defining the vent orifice and the liner.

When using thin-walled, cylindrical-shaped liners, or bushings, insertion of the force-fitted member into the liner has been found to be troublesome. Since the liner has a straight wall cross-section, i.e. is essentially tubular, the only feature in this seal design which can restrain the downward movement of the liner during insertion of the force-fitted member is a bottom support ledge, if any, in the wall defining the vent orifice. However, this was found to be inadequate, as the leading end of the liner tends to be extruded through the vent orifice upon insertion of the force-fitted member. In some instances, the leading edge of the liner can collapse, preventing the force-fitted member from being fully inserted into the liner, resulting in an inadequate seal.

In its first aspect, the present invention provides an electrochemical cell comprising active components of the cell assembled within a housing, said housing comprising a container having an open end closed by a cover and having at least one vent orifice defined by a wall in said housing; a bushing defining an axial opening and comprising an upper portion terminating with a thinner walled lower portion, the cross-sectional wall of the upper portion being thicker than the cross-sectional wall of the lower portion, said bushing disposed within and against the wall defining the vent orifice in said housing; a seal member having an external circumference smaller than the internal circumference of the opening defined in the upper portion of the bushing and larger than the internal circumference of the opening defined in the lower portion of the bushing; said seal member force-fitted within the lower portion of the bushing to seal the cell; wherein at least one of said bushing and said seal member is resiliently deformable such that said seal member will be at least partially expelled from the vent opening upon a predetermined internal gas pressure buildup within the cell to provide a vent for the cell, and wherein said vent is non-resealable.

It is an advantage of the present invention that it provides a non-resealable safety vent closure for electrochemical cells, and specifically oxyhalide cells, that vents at a predictable, safe pressure.

It is another advantage of the present invention that it provides a non-resealable safety vent closure for cylindrical cells employing, for example, liquid oxyhalides as the active cathode material and having reduced electrolyte leakage characteristics.

It is another advantage of the present invention that it provides a non-resealable safety vent closure for nonaqueous cells that is inexpensive to manufacture and easy to assemble.

The bushing of the vent is suitably located in an appropriate recess moulded in the cell container or cover. The recess does not need to be moulded, and can be formed separately and then fixed in place by gluing or welding, for example. However, such methods tend to complicate production of the cell, and are also likely to increase the possibility of leakage at the joint. Further discussion will include these possibilities, but will be directed toward the preferred embodiment of an integral recess.

The recess will preferably include means to prevent the bushing being inserted too far into the cell. One way to achieve this is to provide a retaining wall at the bottom of the recess, such wall having a suitable opening to correspond with the bore of the bushing. Again, it is preferred to provide the wall integrally, and it may be in the form of a flange around the end of the recess. The flange may be continuous or discontinuous, such as flaps, provided that it serves to retain the bushing. One suitable embodiment has a recurved wall projecting back into the bore to retain the bushing.

The retention means may be of any suitable shape, and may be cup-shaped to receive a corresponding shaped end of the bushing, for example. Such a shape may be effected by way of moulding during formation of the cannister or cover.

The bushing may also be retained in the recess by means of a ledge, for example, in the recess, which interacts with a corresponding feature of the bushing. One suitable example may have the recess narrowing as it progresses into the cell, with a suitable conical-shaped bushing fitting into the volume provided.

The recess in which the bushing is located may simply be a recess, or may also comprise further features. For example, it may be desirable to define a wall of the recess protruding from the surface of the cannister or cover and which comprises channels to assist in the dispersion of gas if the cell is flush against a surface. However, where there is no particular purpose to be served by extending the walls of the recess above the surface of the cell, it may be desirable to have the opening flush with the cell. In either instance, a further suitable modification may include a bevelled edge to assist in the preliminary location of the bushing.

The shape of the bushing, recess and seal may be anything suitable. While a rounded contour may be generally used and acceptable, this is not restrictive nor definitive. One useful configuration may be where the bushing and recess have a square section for the interacting walls, while the bushing defines a generally circular bore, for example. The bore and seal may have any configuration, but a circular bore and a spherical seal are generally preferred, as this avoids corners or edges which may catch and interfere with release of the seal.

Any of the techniques known in the art may be used to prevent leakage of electrolyte. For example, a layer of sealant may be provided between recess and bushing.

The bore of the bushing is necessarily sufficiently wide at the mouth to allow entry of the seal. The mouth may be any suitable shape, and will suitably have a similar section to that of the seal, only somewhat wider. The extent to which the mouth is larger than the seal is not critical, provided that when the bushing is fitted in the recess, the mouth is still larger than the seal. The bushing may be force-fitted, glued, sealed or crimped into place in the recess, for example, and any may be used provided that the seal may still easily locate in the mouth of the bore.

The bore section may develop in any suitable manner. For example, a funnel shape may serve to asist in initially guiding the seal, and such a funnel may commence immediately at the start of the mouth, possibly narrowing down to the size of the seal only after a short distance, or may only commence after a distance of bore of the same diameter.

Constriction of the bore may be at any appropriate stage within its length. The constriction should be, at its narrowest, sufficiently narrower than the seal such that, to fit the seal therein, it is necessary to employ force. It may be desirable to further constrict the bore in a distal portion, so that the seal cannot be forced all of the way through the bore, or only with a considerable excess of external pressure, such as would not apply under normal conditions. A constriction of about 1 mm or so less than the seal may, for example, suffice in practice to ensure that the seal needs to be force- fitted. The constriction should not be so narrow as to effectively block the bore.

Constriction of the bore may be gradual or sudden along its length. It is possible to provide a step down to a narrower bore, but it is preferred that the step should not be in one plane, although such an embodiment is workable. Where such a step is provided, it is preferred to slope the surface, at least slightly, to aid insertion of the seal. If the surface is provided in one plane, then bevelled edges may be appropriate.

It is preferred that the constriction continue for a length within the bore such that the seal may be securely force-fitted within the constricted section. Such constriction may continue to the end of the bore, or the bore may open out towards its terminus, or may constrict still further to ensure that the seal cannot be forced all of the way into the cell. This purpose may also be served by the recess which, in addition to retaining the bushing, may also serve to prevent internal exit of the seal.

One or both of the seal and bushing is of a resiliently deformable material, thereby to allow the seal to form a tight force-fit within the bore. It may be possible to line the bore with a suitably resilient material, and leave the remainder of the bushing and seal as non-resilient members. However, it is generally preferred to provide either the bushing or the seal as deformable members. If both are deformable, this may not be as advantageous, as there may be friction, and the degree of deformation may be high enough to make calculation of critical internal gas pressure difficult. This is not a problem, if the materials are selected appropriately.

When a predetermined pressure has built up within the cell, the seal is dislodged to vent the cell. The only requirement is that the pressure is relieved, but it will usually be the case that the seal is expelled sufficiently to permit internal gas to escape the cell. This may be achieved by the seal being completely expelled or, alternatively, by being dislodged to a position, still within the bore, where gas can be forced past the seal by the internal pressure.

If desired, the seal may be covered in some way, either for aesthetic or practical reasons.

It is also desirable for those parts of the components to be corrosion resistant. This may be achieved either by constructing the parts from corrosion-resistant materials, or by coating the parts with such materials.

Suitable corrosion-resistant materials for the bushing include nylon, ceramic, polyethylene, polypropylene, polytetrafluoroethylene, fluorinated ethylene-propylene copolymer, perfluoroalkoxy polymer, ethylene-fluorinated ethylene copolymer, glasses and metals. In some cell applications, it may be preferable to use a resiliently deformable bushing. It will be understood that the selection of the proper material will depend on the electrochemical system employed in order to ensure that it will be corrosion resistant to the cell components. For oxyhalide cells, a preferred material for the bushing is Tefzel, (trademark of E. I. DuPont de Nemours & Co., Wilmington, Delaware, USA), an ethylene-tetrafluoroethylene copolymer.

The seal member may be made of metals, glass or ceramics. It may be resiliently deformable and made of a material or coated with a material that is chemically resistant to the cell's components. If the seal member is resiliently deformable, the material of which it is made may be selected from such materials as are recited above, including elastomeric materials such as fluorocarbon rubbers, ethylene-propylene rubber, neoprene rubber, and butyl or chlorobutyl rubbers.

If the deformable material forming the seal member is to be coated with a chemically inert material, the the deformable material may be nylon, hard rubber, or the like. Suitable materials for use in this invention but not suitable for some of the oxyhalide cell systems include nylon, polypropylene, polycarbonate, acrylic polymers. Preferably, the seal member has a smooth spherical configuration and the inner surface of the bushing is substantially smooth.

The safety vent closure of the present invention may be made to vent at any predetermined pressure build-up within the cell by regulating such factors as: the size of the vent opening in the bushing with respect to the size of the seal member; the material of which the seal member is made; the degree of deformation required of the seal member and/or corrosion-resistant bushing; the thickness and material of which the corrosion-resistant bushing is made; and the shapes of the vent opening and the seal member.

In the practice of the invention, the seal member may be inserted rapidly into the orifice with a minimum of force to attain a reliable and predictable safety vent closure. The use of a controlled height dead-stop ram to insert the seal member is particularly desirable for automatic assembly operations.

The bushing for use in the present invention typically comprises an upper portion and a lower portion, in which the cross-sectional wall of the upper portion is thicker than the cross-sectional wall of the lower portion, and wherein the circumference of the opening defined in the upper portion is greater than the circumference of the opening defined in the lower portion of the bushing.

If desired, at least a segment of the inner wall of the upper portion may be tapered so that the seal member, such as a glass sphere, can be guided into the lower portion of the bushing to seat within the opening. For example, for a cell of 0.475 inch (12.1 mm) diameter and 21.64 inch (550 mm) height, the thickness of the cross-sectional wall of the upper portion could be from 0.020 to 0.070 inch (0.51 to 1.78 mm), while the thickness of cross-sectional wall of the lower portion could be 0.004 to 0.030 inch (0.10 to 0.76 mm).

In one embodiment, the vent orifice is disposed in the cover and the wall defining the vent orifice (recess) is extended downward and bent into a U-shaped bottom into which the leading edge of the lower portion of the bushing may be inserted and mechanically secured.

In another embodiment, the wall defining the vent orifice terminates with a support flange so that the leading edge of the lower portion of the bushing can rest on the support flange during assembly.

If desirable, a layer of sealant may be disposed between the wall of the orifice and the bushing to prevent leakage of the electrolyte at this interface. Many electrolytes have a propensity for creeping along component parts of a cell and eventually may find a path to the outside of the cell. Electrolyte leakage not only reduces the capacity of the cell but renders the cell unmarketable in the conventional retail trade.

Suitable sealant materials for use in the present invention are asphalt, grease and wax, such as halocarbon wax, which is a saturated low molecular weight polymer of chlorotrifluoroethylene having the general formula: -(CH₂CFCℓ)ₙ-; adhesives such as cyanoacrylic polymers, polyamides, vinylidene fluoride-hexafluoropropylene polymers, epoxy or any material which is resistant to moisture, having reasonable adhesion to the cell's housing and/or the bushing, which is chemically resistant to the cell's components, and which may be easily applied.

The sealant layer may be applied to the wall defining the orifice and/or the bushing prior to or when the bushing is disposed adjacent the wall of the orifice in the housing.

Although a layer of sealant may be used, it is advantageous to design the bushing such that the upper portion extends to be flush or above the top surface of the vent orifice, thereby effectively eliminating any electrolyte from contacting the interface of the bushing and the wall defining the vent orifice during filling of the electrolyte into the cell. The top edge of the upper portion of the bushing may contain one or more grooves or notches to provide a vent passage in the event an object is positioned across the vent orifice and upper edge of the bushing. In this embodiment, gas may escape through the groove or notch if an object is placed over the top edge of the bushing.

The non-resealable safety vent closure of the present invention may be employed with all size cells and is ideally suited for liquid cathode cell systems employing, for example, a liquid oxyhalide. In addition to providing an excellent and effective safety venting means, the present invention also permits the initial assembling of the solid components of a cell within a container that may be closed in a conventional manner before adding the cell's liquid component. When the cell's liquid component is an oxyhalide-based liquid cathode, such as thionyl chloride or sulphuryl chloride, then these corrosive liquids may be injected into the cell's housing through the small orifice in the bushing and cover, for example, by vacuum filling, after the cell cover is secured to the container. This effectively eliminates the corrosion of crimping equipment used to close the cell, as well as eliminating contamination at the interfaces of the container-gasket and gasket-cover of the cell by the oxyhalide.

When using vacuum filling techniques to inject the electrolyte into the cell, a layer of sealant at the interface of the vent orifice and bushing can effectively prevent any of the electrolyte from being drawn up between the bushing and the orifice in the cover.

A cell for use in the present invention may be of the split internal anode/outer cathode collector construction as described in US-A-4,032,696 or the split internal cathode collector construction as described in US-A-4,048,389.

Suitable nonaqueous liquid cathode materials for use in cells of the present invention may be one or more of the liquid oxyhalides of an element of Group V or Group VI of the Periodic Table and/or one or more of the halides of an element of Group IV to Group VI. For example, such nonaqueous cathode materials include sulphuryl chloride, thionyl chloride, phosphorus oxychloride, thionyl bromide, chromyl chloride, vanadyl tribromide, selenium oxychloride, sulphur monochloride, sulphur monobromide, selenium tetrafluoride, selenium monobromide, thiophosphoryl chloride, thiophosphoryl bromide, vanadium pentafluoride, lead tetrachloride, titanium tetrachloride, disulphur decafluoride, tin bromide trichloride, tin dibromide dichloride and tin tribromide chloride. Another suitable cathode material is liquid sulphur dioxide.

Anodes suitable for use in nonaqueous liquid cathode cell systems may generally be consumable metals, and include the alkali metals, alkaline earth metals and alloys of alkali metals or alkaline earth metals with each other and other metals. The term "alloy" as used herein is intended to include: mixtures; solid solutions such as lithium-magnesium; and intermetallic compounds such as lithium monoaluminide. Preferred anode materials are the alkali metals, particularly lithium, sodium and potassium. When using a lithium anode, the anode may be coated with a vinyl resin, as disclosed in UA-A-3,993,501.

The cathode collector for use in nonaqueous liquid cathode cell systems has to be electronically conductive so as to permit external electrical contact to be made with the active cathode material and also provide extended area reaction sites for the cathodic electrochemical process of the cell. Materials suitable for use as a cathode collector are carbon materials and metals such as nickel, with acetylene black being preferable. In addition, the cathode collector, when made of a particulate material, should be capable of being moulded directly within a can, or be capable of being moulded into various size discrete bodies that may be handled without cracking or breaking.

To impart a cohesive characteristic to some types of cathode collectors, such as carbonaceous cathode collectors, a suitable binder material, with or without plasticisers and with or without stabilisers, may be added to the cathode collector materials. Suitable binder materials for this purpose include vinyl polymers, polyethylene, polypropylene, polyacrylics and polystyrene. For example, polytetrafluoroethylene is the preferred binder for cathode collectors for use with liquid oxyhalide cathodes.

The binder, if required, should be added in an amount between about 5% and about 30% by weight of the moulded cathode collector, since an amount less than 5% would not provide sufficient strength to the moulded body, while an amount larger than 30% would wet-proof the surface of the carbon and/or reduce the available surface of the carbon, thereby reducing the activation side areas required for the cathodic electrochemical process of the cell. Of importance in selecting the material for the cathode collector is to select materials that will be chemically stable in the cell system in which they are to be used.

A solute for use in liquid cathode cell systems may be a simple or double salt which produces an ionically conductive solution when dissolved in a suitable solvent. Preferred solutes for nonaqueous systems are complexes of inorganic or organic Lewis acids and inorganic ionisable salts. The only requirements for utility are that the salt, whether simple or complex, be compatible with the solvent being employed and that it yield a solution which is ionically conductive.

According to the Lewis or electronic concept of acids and bases, many substances which contain no active hydrogen may act as acids or acceptors of electron doublets. The basic concept is set forth in the chemical literature (Lewis, G.N., Journal of the Franklin Institute, Vol. 226, July/December (1938), pages 293-313).

A suggested reaction mechanism for the manner in which these complexes function in a solvent is described in US-A-3,542,602 wherein it is suggested that the complex or double salt formed between the Lewis acid and the ionisable salt yields an entity which is more stable than either of the components alone.

Typical Lewis acids suitable for use in conjunction with liquid oxyhalide cathodes include aluminium fluoride, aluminium bromide, aluminium chloride, antimony pentachloride, zirconium tetrachloride, phosphorus pentachloride, boron fluoride, boron chloride and boron bromide.

Ionisable salts useful in combination with the Lewis acids include lithium fluoride, lithium chloride, lithium bromide, lithium sulphide, sodium fluoride, sodium chloride, sodium bromide, potassium fluoride, potassium chloride and potassium bromide.

It will be apparent to those skilled in the art that the double salts formed by a Lewis acid and an ionisable salt may be used as such, or the individual components may be added to the solvent separately to form the salt or the resulting ions in situ. One such double salt, for example, is that which is formed by the combination of aluminium chloride and lithium chloride to yield lithium aluminium tetrachloride.

If desired, and specifically for the halides, a co-solvent may be added to the liquid active reducible cathode and solute solution to alter the dielectric constant, viscosity or solvent properties of the solution to achieve better conductivity, as appropriate. Some examples of suitable co-solvents are tetrahydrofuran, 1,3-dioxolane, 3-methyl-2-oxazolidone, propylene carbonate, γ-butyrolactone, sulpholane, ethylene glycol sulphite, dimethyl sulphite, benzoyl chloride, dimethoxyethane, dimethyl isoxazole, diethyl carbonate and sulphur dioxide.

Suitable separators for use with liquid cathodes in nonaqueous cells are the woven or nonwoven glass separators.

The container of the cell may be made of stainless steel, iron, nickel, plastic, coated metals or some other suitable material.

Some preferred combinations of nonaqueous cathode materials and anodes are as follows:
(1) sulphuryl chloride/Li or Na;
(2) thionyl chloride/Li or Na;
(3) phosphorus oxychloride/Li or Na;
(4) sulphur monochloride/Li or Na;
(5) sulphur monobromide/Li or Na; and
(6) selenium tetrafluoride/Li or Na.

Preferably, the cells for use in the present invention are liquid oxyhalide cells using sulphuryl chloride, thionyl chloride or mixtures thereof with a lithium anode.

It will be understood that the safety vent closure of the present invention may be used in other cell systems such as, for example, Leclanche dry cells, zinc chloride cells, lithium-MnO₂ cells, lithium-iron sulphide cells, alkaline-MnO₂ cells, nickel-cadmium cells, and lead-acid cells.

The present invention will now be further illustrated with reference to the accompanying drawings, in which:
Figure 1 is a vertical cross-sectional view of an electrochemical cell made in accordance with the present invention;
Figure 2 is a horizontal cross-sectional view taken along line 2-2 of Figure 1;
Figure 3 is an enlarged vertical cross-sectional view of the cell cover and the cell container of the electrochemical cell shown in Figure 1, which shows in detail the cell cover and the vent bushing of the cell;
Figure 4 is an enlarged cross-sectional view of another embodiment of a cell cover and cell container of an electrochemical cell which shows in detail the cell cover and the vent bushing of the cell; and
Figure 5 is a perspective view of a spring collector shown in figure 1.

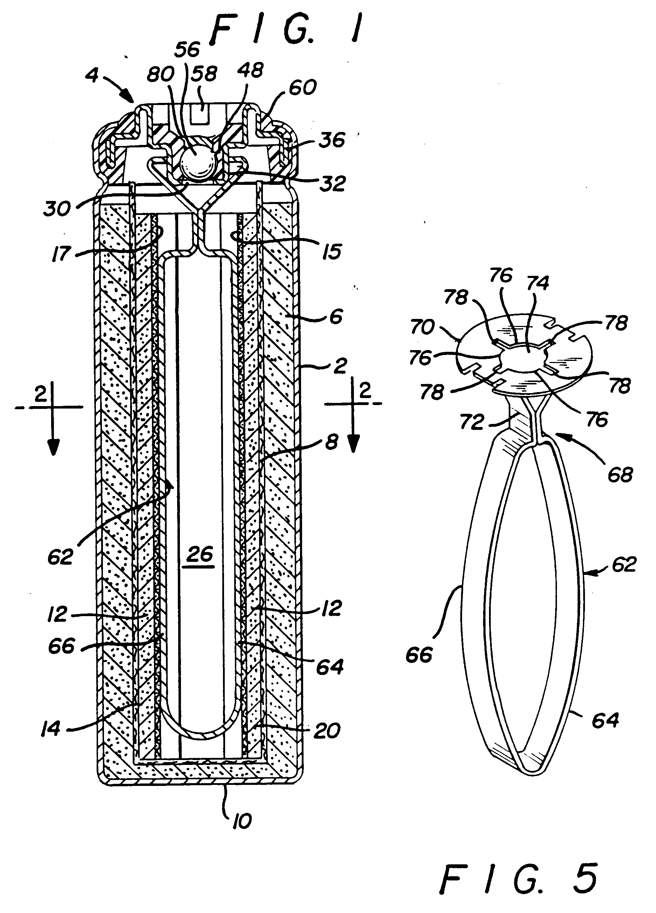

The cell housing in Figure 1 comprises a cylindrical cell container 2 having an open end that is closed by a cell cover 4. A cathode collector 6 is in contact with the inner upstanding circumference of the cell container 2, thereby adapting the container 2 as the cathodic or positive terminal for the cell. Exposed within and in contact with the inner circumference of cathode collector 6 is a separator liner 8 with a bottom separator or disk 10. If desired, the cathode collector material may be extruded within the container 2, rolled with the container material or composed of one or more segments to form a cylindrical tube thereafter placed in the container.

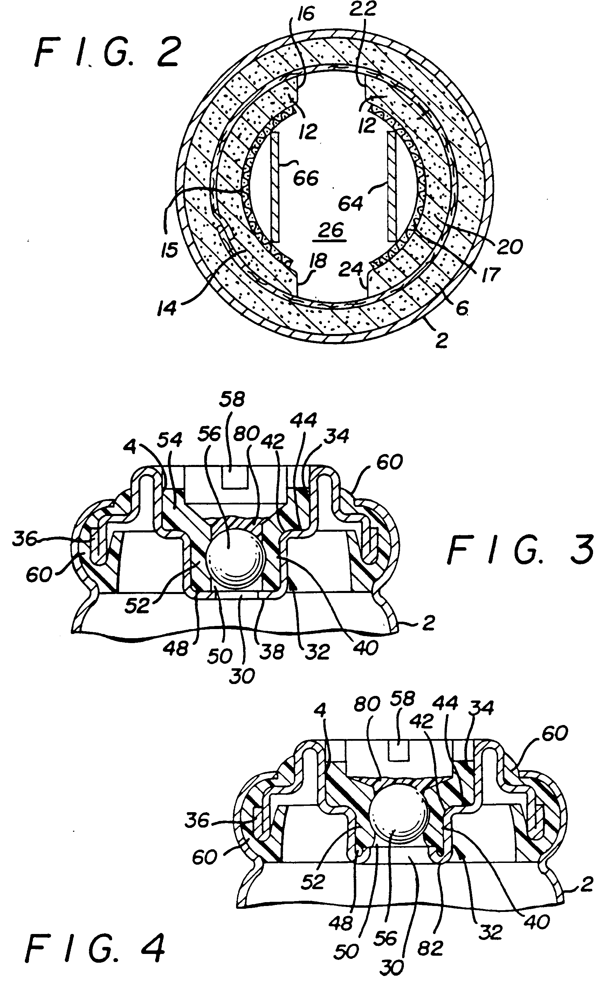

A two-member anode 12 shown in Figures 1 and 2 is comprised of a first half cylindrical annular member 14 having flat end faces 16 and 18 and a second half cylindrical annular member 20 having flat end faces 22 and 24. When the flat end faces of each cylindrical half member are arranged in an opposing fashion, as shown in Figures 1 and 2, an axial cavity 26 is defined between the cylindrical half annular members 14 and 20.

Cathode collector 6 should be electronically conductive so as to permit external contact to be made with the active cathode material and also to provide extended area reaction sites for cathodic electrochemical processes of the cell.

If desired, arcuate type backing sheets 15 and 17 may be disposed against the inner surface wall of the anode bodies 14 and 20, respectively, to provide uniform current distribution over the anode. This will result in a substantially uniform consumption or utilisation of the anode, while also providing a substantially uniform spring pressure over the inner wall surface of anode 12.

Referring to Figures 1 and 3, cylindrical cover 4 comprises a circular cover orifice 30, vent bushing containment section 32, annular cap section 34 and circumferential cover flange 36. Vent bushing containment section 32 comprises circumferential support ledge 38, cylindrical sealing well 40 and rounded containment section shoulder 42.

Circumferential support ledge 38, which is integrally joined to sealing well 40 at the bottom, is inwardly directed throughout is circumference toward the geometric axis of the sealing well, thereby defining cover vent orifice 30. Rounded containment section shoulder 42 is located at the intersection of the top of sealing well 40 and cover ledge 44, the latter being the horizontal surface spanning the area between shoulder 42 and cap section 34. Rounded containment section shoulder 42 provides a smooth transition at that intersection without sharp edges. The cover is tightly sealed by conventional closing methods to container 2 with insulating gasket 60 therebetween.

It is preferred that cover 4 be formed by drawing a section of sheet metal, preferably a sheet of stainless steel. The cover orifice 30 may be formed in cover 4 by conventional punching or drilling.

Cylindrical bushing 48, which has a bushing orifice 50, is positioned in cover 4 so that one of its ends faces support ledge 38 and its cylindrical lower portion 52 is in contact with the inner surface of sealing well 40, while its cylindrical upper portion 54 is in contact with the inner surface of cap section 34.

Vent bushing 48 comprises an upper portion 54 having its cross-sectional wall thicker than the cross-sectional wall of the lower portion 52. This embodiment of the bushing provides for easy manufacture and assembly of the cell. In particular, the upper thick vertical wall section 54 of the bushing 48 provides a circumferential gate to allow the moulding of a very thin wall cross-section for the lower portion 52. The upper portion 54 also provides vertical support for the thinner lower section 52 during insertion of seal member 56 and prevents the end of the lower portion 52 from collapsing or from extruding into and through the bottom of vent orifice 30.

The upper portion 54 will effectively isolate an electrolyte filling head from the cell's cover, this protecting the cover which may be subject to corrosion by the electrolyte in humid environments. The upper portion 54 also facilitates the insertion of seal member 56 into the lower portion 52 since upper portion 54 is fully supported in the axial direction. The internal wall of upper portion 54 of bushing 48 is shown with a tapered segment at its lower end to facilitate the placing of the seal member 56 into the opening defined in the lower portion 52 of bushing 48.

Bushing 48 is shown with grooves or notches 58 in its upper portion 54 to provide a path to vent gases from within the cell in the event an object is placed over the top of bushing 48.

It is preferred that the outer periphery of cover 4 be bent through an obtuse angle, preferably through one approaching or equal to 180°, to provide a cover flange 36, as shown in Figures 1 and 3. Such a construction, also referred to as a "roll-back" construction, provides a tight seal between cover 4 and cell container 2, since flange 36 upon assembly is compressed against gasket 60, which causes flange 36 to "follow" gasket 60 if any dimensional changes to the cell occur from the thermal expansion and/or contraction.

As shown in Figures 1 and 5, an electronically conductive spring strip 62, whose legs 64 and 66 are biased against the two screen-backed anode members 14 and 20, is electrically connected to cell cover 4 so as to make cover 4 the anodic or negative terminal of the cell. The ends of spring legs 64 and 66 may be electrically connected to cover 4 by welding the ends to cover 4. Alternatively, the geometric configuration of cell cover 4 allows use of a novel connection system.

Referring to Figure 5, there is shown a unitary spring collector assembly 68, comprising spring strip 62 and an annular fastening disk 70. Disk 70 is made of a resilient material, such as stainless steel. The spring legs 64 and 66 of spring strip 62 are joined, as by welding, in region 72. Disk 70 contains a castellated fastening hole 74, having four downwardly bent, radially and inwardly directed tabs 76 spaced at equal intervals about the circumference of hole 74 so as to define four radially directed slits 78. The diameter of hole 74 is smaller than the outside diameter of the cylindrical exterior surface of sealing well 40 that is disposed inside the cell. Thus, when disk 70 is forced axially onto the exterior surface of sealing well 40, the tabs in disk 70 will be forced to deflect slightly open. The deformed interference fit created by the spring tabs 76 of disk 70 thereafter firmly secures disk 70 to cover 4 in a tight compressive manner, thereby ensuring electrical connection of cover 4 with spring strip 62.

Bushing 48 preferably has an outside surface contour slightly larger than the inside surface contour of cover 4 so that vent bushing 48 may be press-fitted into the sealing well of cover 4 to yield an interference fit.

Vent bushing 48 is inserted into sealing well 40 until the bottom of upper portion 54 of bushing 48 abuts cover ledge 44. In this way, cover ledge 44 provides a positive stop for the vent bushing 48. In addition, the interference fit causes the outer surface of vent bushing 48 to be strongly forced against the inner surface of the wall defining the orifice in cover 4, which causes intimate contact between those two surfaces, thereby effectively preventing the transport of lithium ions from the inside to the outside of the cell via the interface between vent bushing 48 and sealing well 40.

It is also preferred, for oxyhalide cells, that the interior wall of the cover be coated with a sealant or adhesive prior to or after insertion of bushing 48. Such an adhesive more completely ensures the sealing of bushing 48 to the wall of cover 4 in the event of possible imperfections on the surface of bushing 48 or the interior wall of cover 4.

After insertion of vent bushing 48 into cover 4, disk 70 of spring collector assembly 68 is pressed onto the cylindrical outside of sealing well 40 of cover 4, which is then inserted into its proper location inside annular gasket 60, which is located at the open end of cell container 2.

It is preferred that gasket 60 be made of a copolymer of ethylene and tetrafluoroethylene and coated with a sealant of the same type preferably use to coat the interior wall of cover 4. At the same time that cover 4 is inserted into annular gasket 60, container 2 has already been supplied with a cathode collector 6, a separator liner 8, bottom separator 10, a two-member anode 12, and backing sheets 15 and 17. As cover 4 is positioned with respect to gasket 60, the legs 64, 66 of the spring strip 62 are squeezed together and forced into the axial opening between the two screen-backed anode members 14 and 20, as shown in Figures 1 and 2. The inserted spring strip 62 resiliently biases the two anode members 14 and 20, via backing screens 15 and 17, so as to provide substantially uniform and continuous pressure contact over the inner wall of the anode members.

After inserting cover 2 inside gasket 60, the cell is closed and sealed using conventional closing techniques, so that cell container 2 and cell cover 4 make up a sealed cell housing. A fill head assembly is next pressed into vent bushing 48 and the cell is filled with electrolyte.

After the container is filled with the cathode-electrolyte, seal member 56 is disposed over vent bushing orifice 50 in bushing 48, and a ram member is used to force seal member 56 into orifice 50 to a predetermined depth.

After removal of the ram, a layer of sealant 80 may, if desired, be disposed over seal member 56 to produce a fully sealed cell. Suitable sealing materials include halocarbon wax, asphalt, or any other material that is resistant to moisture and is applied easily.
Preferably, the sealant material should be applied in liquid form and then allowed to solidify. The finished cell may then be encased in an outer jacket and covering cap section (not shown).

Figure 4 shows another embodiment of a bushing and cover assembly that uses the same reference numbers for identical parts as shown in Figure 3. The only difference is that the flange 38 of cover 4 is extended and bent into a U-shaped configuration 82 into which the leading edge of the lower portion 52 on bushing 48 is seated and then the U-shaped portion 82 is crimped to firmly secure lower portion 52 therein.

This embodiment provides an alternate way to secure the bushing 48, so that during the electrolyte filling process, no electrolyte may become entrapped at the interface between bushing 48 and the inner surface of sealing well 40.

In an alternate embodiment, instead of the U-shaped portion, a separate ring, serving as an additional sealing member, may be employed against the inside surface of the lower edge of lower portion 52. In this embodiment, the lower edge of lower portion 52 is compressed between the ring and the lower extremity of the wall defining the orifice in the cover.

## Claims

1. An electrochemical cell comprising active components of the cell assembled within a housing, said housing comprising a container (2) having an open end closed by a cover (4) and having at least one vent orifice (30) defined by a wall in said housing; a bushing (48) defining an axial opening (50) and comprising an upper portion (54) terminating with a thinner walled lower portion (52), the cross-sectional wall of the upper portion (54) being thicker than the cross-sectional wall of the lower portion (52), said bushing (48) disposed within and against the wall (40) defining the vent orifice (30) in said housing; a seal member (56) having an external circumference smaller than the internal circumference of the opening defined in the upper portion (54) of the bushing (48) and larger than the internal circumference of the opening defined in the lower portion (52) of the bushing (48); said seal member (56) force-fitted within the lower portion (52) of the bushing (48) to seal the cell; wherein at least one of said bushing (48) and said seal member (56) is resiliently deformable such that said seal member (56) will be at least partially expelled from the vent opening upon a predetermined internal gas pressure buildup within the cell to provide a vent for the cell, and wherein said vent is non-resealable.

2. A cell according to claim 1, wherein the wall defining the vent orifice (30) terminates with an inward flange (38), optionally in the form of a U-shaped bend, the bottom edge of the lower portion (52) of the bushing (48) resting on the flange (38).

3. A cell according to any preceding claim, wherein the cell comprises a housing and a cover (4), the vent orifice (30) is located in the cover (4), and the top edge of the upper portion (54) of the bushing (48) is substantially flush with the top surface of the cover (4).

4. A cell according to any preceding claim, wherein the top edge of the upper portion (54) of the bushing (48) contains at least one notch (58).

5. A cell according to claim 4, wherein the top edge of the upper portion (54) contains at least two-spaced apart notches (58).

6. A cell according to any preceding claim, wherein the cell comprises a housing, a wall of the housing defining an orifice (30) in which is located the bushing (48), the external surface contour of the bushing (48) being similar to the internal surface contour of the wall defining the orifice (30), thereby enabling the bushing (48) to seat within the orifice (30).

7. A cell according to claim 6, wherein the external surface contour of the bushing (48) is larger than the internal surface contour of the wall defining the orifice (30), so that the bushing (48) is friction fitted within the vent orifice (30).

8. A cell according to claim 6 or 7, wherein at least a portion of the inner surface of the upper portion (54) of the bushing (48) has a tapered contour extending to the lower portion (52) of the bushing (48).

9. A cell according to any preceding claim, wherein the bushing (48) is made from nylon, ceramic, polyethylene, polypropylene, polytetrafluoroethylene, fluorinated ethylene-propylene copolymer, perfluoroalkoxy polymer, ethylene-fluorinated ethylene copolymer, glass and/or a metal.

10. A cell according to any preceding claim, wherein the seal member (56) is made from polyethylene, polytetrafluoroethylene, fluorinated ethylene-propylene copolymer, perfluoroalkoxy polymer, ethylene-tetrafluoroethylene copolymer, nylon, polypropylene, polycarbonate, acrylic polymers, metals, glass and/or ceramics.

11. A cell according to any preceding claim, wherein a sealant is disposed at the interface of the bushing (48) and the wall defining the vent orifice (30).

12. A cell according to any preceding claim, wherein a sealant is disposed over the seal member (56).

13. A cell according to any preceding claim, wherein the seal member (56) is coated with a material chemically inert to the cell's components.

14. A cell according to any preceding claim, which employs a cathode-electrolyte contains at least one of the liquid oxyhalides: thionyl chloride, sulphuryl chloride, phosphorus oxychloride, thionyl bromide, chromyl chloride, vanadyl tribromide and selenium oxychloride.

15. A cell according to any preceding claim, wherein the seal member (56) is glass and the bushing (48) is ethylenetetrafluoroethylene copolymer.

## Patentansprüche

1. Elektrochemische Zelle, umfassend aktive Komponenten der Zelle, die in einem Gehäuse angeordnet sind, welches Gehäuse aufweist:
einen Behälter (2), der eine offene, mit einer Abdeckung (4) verschlossene Seite und mindestens eine Druckausgleichsöffnung (30) aufweist, die durch eine Wandung in dem Gehäuse begrenzt ist;
eine Durchführung (48), die eine axiale Öffnung (50) begrenzt und einen oberen Abschnitt (54) aufweist, der in einem dünnerwandigen unteren Abschnitt (52) endet, wobei die Querschnittwandung des oberen Abschnitts (54) dicker ist als die Querschnittwandung des unteren Abschnitts (52), wobei die innerhalb und an der Wandung (40) angeordnete Durchführung (48) die Druckausgleichsöffnung (30) im Gehäuse begrenzt;
ein Dichtungsteil (56) mit einem Außenumfang, der kleiner ist als der Innenumfang der im oberen Abschnitt (54) der Durchführung (48) begrenzten Öffnung und größer ist als der Innenumfang der in dem unteren Abschnitt (52) der Durchführung (48) begrenzten Öffnung; wobei das Dichtungsteil (56) im unteren Abschnitt (52) der Durchführung (48) zum Dichten der Zelle mit Preßpassung sitzt;
bei welcher mindestens eine der Durchführung (48) und des Dichtungsteils (56) derart rückstellfähig verformbar ist, daß das Dichtungsteil (56) bei Aufbau eines vorbestimmten inneren Gasdruckes in der Zelle mindestens teilweise aus der Druckausgleichsöffnung herausgedrückt wird, um für die Zelle einen Druckausgleich zu gewähren,
und bei welcher der Druckausgleich nicht wiederschließbar ist.

2. Zelle nach Anspruch 1, bei welcher die die Druckausgleichsöffnung (30) begrenzende Wandung in einem Innenflansch (38) endet, wahlweise mit der Form eines U-Rohrs, und die Unterkante des unteren Abschnitts (52) der Durchführung (48) auf dem Flansch (38) ruht.

3. Zelle nach einem der vorgenannten Ansprüche, bei welcher die Zelle ein Gehäuse und eine Abdeckung (4) aufweist, die Druckausgleichsöffnung (30) sich in der Abdeckung (4) befindet und die Oberkante des oberen Abschnitts (54) der Durchführung (48) mit der Oberseite der Abdeckung (4) weitgehend bündig ist.

4. Zelle nach einem der vorgenannten Ansprüche, bei welcher die Oberkante des oberen Abschnitts (54) der Durchführung (48) mindestens eine Aussparung (58) enthält.

5. Zelle nach Anspruch 4, bei welcher die Oberkante des oberen Abschnitts (54) mindestens zwei beabstandete Aussparung (58) enthält.

6. Zelle nach einem der vorgenannten Ansprüche, bei welcher die Zelle ein Gehäuse aufweist, eine Wandung des Gehäuses eine Öffnung (30) begrenzt, in der sich die Durchführung (48) befindet, wobei die Kontur der Außenfläche der Durchführung (48) ähnlich der Kontur der Innenfläche der die Druckausgleichsöffnung (30) begrenzenden Wandung ist, wodurch die Durchführung in die Düse eingepaßt werden kann.

7. Zelle nach Anspruch 6, bei welcher die Kontur der Außenfläche der Durchführung (48) größer ist als die Kontur der Innenfläche der die Öffnung (30) begrenzenden Wandung ist, so daß die Durchführung (48) in der Druckausgleichsöffnung (30) mit Reibpassung sitzt.

8. Zelle nach Anspruch 6 oder 7, bei welcher mindestens ein Abschnitt der Innenfläche des oberen Abschnitts (54) der Durchführung (48) eine sich zum unteren Abschnitt (52) der Durchführung (48) ertreckende, verjüngende Kontur hat.

9. Zelle nach einem der vorgenannten Ansprüche, bei welcher die Durchführung (48) gefertigt ist aus: Nylon, Keramik, Polyethylen, Polypropylen, Polytetrafluorethylen, fluoriertem Ethylen/Propylen-Copolymer, Perfluoralkoxy-Polymer, Ethylen/fluoriertes Ethylen-Copolymer, Glas und/oder Metall.

10. Zelle nach einem der vorgenannten Ansprüche, bei welcher das Dichtungsteil (56) gefertigt ist aus: Polyethylen, Polytetrafluorethylen, fluoriertem Ethylen/Propylen-Copolymer, Perfluoralkoxy-Polymer, Ethylen/Tetrafluorethylen-Copolymer, Nylon, Polypropylen, Polycarbonat, Acrylpolymeren, Metallen, Glas und/oder Keramik.

11. Zelle nach einem der vorgenannten Ansprüche, bei welcher an der Grenzfläche der Durchführung (48) und der die Druckausgleichsöffnung (30) begrenzenden Wandung ein Dichtmittel angeordnet ist.

12. Zelle nach einem der vorgenannten Ansprüche, bei welcher über dem Dichtungsteil (56) ein Dichtmittel angeordnet ist.

13. Zelle nach einem der vorgenannten Ansprüche, bei welcher das Dichtungsteil (56) mit einem gegenüber den Komponenten der Zelle chemisch inerten Material beschichtet ist.

14. Zelle nach einem der vorgenannten Ansprüche, bei welcher der eingesetzte Kathodenelektrolyt mindestens einen der flüssigen Oxidhalogenide enthält: Thionylchlorid, Sulfurylchlorid, Phosphoroxychlorid, Thionylbromid, Chromylchlorid, Vanadyltribromid und Selenoxychlorid.

15. Zelle nach einem der vorgenannten Ansprüche, bei welcher das Dichtungsteil (56) Glas ist und die Durchführung (48) Ethylen/Tetrafluorethylen-Copolymer.

## Revendications

1. Cellule électrochimique comprenant des composants actifs de la cellule assemblés à l'intérieur d'un boîtier, ledit boîtier comprenant un conteneur (2) avec une extrémité ouverte fermée par un couvercle (4) et comportant au moins un orifice d'évent (30) défini par une paroi dans ledit boîtier; une traversée (48) définissant une ouverture axiale (50) et comprenant une partie supérieure (54) se terminant au niveau d'une partie inférieure à paroi plus fine (52), la section de la paroi de la partie supérieure (54) étant plus épaisse que la section de la paroi de la partie inférieure (52), ladite traversée (48) agencée à l'intérieur de la paroi (40) et contre celle-ci, définissant l'orifice d'évent (30) dans ledit boîtier; un élément obturateur (56) ayant une circonférence externe inférieure à la circonférence interne de l'ouverture définie dans la partie supérieure (54) de la traversée (48) et supérieure à la circonférence interne de l'ouverture définie dans la partie inférieure (52) de la traversée (48); ledit moyen obturateur (56) étant ajusté de force à l'intérieur de la partie inférieure (52) de la traversée (48) pour sceller la cellule; au moins un élément, de ladite traversée (48) et dudit moyen obturateur (56) étant déformable élastiquement, de sorte que ledit élément obturateur (56) sera au moins partiellement expulsé de l'ouverture d'évent lors de l'établissement d'une pression de gaz interne prédéterminée à l'intérieur de la cellule pour fournir un évent pour la cellule, ledit évent ne pouvant pas être rescellé.

2. Cellule selon la revendication 1, dans laquelle la paroi définissant l'orifice d'évent (30) se termine au niveau d'une bride interne (38), pouvant au choix avoir une forme de coude en U, le bord inférieur de la partie inférieure (52) de la traversée (48) reposant sur la bride (38).

3. Cellule selon l'une quelconque des revendications précédentes, la cellule comprenant un boîtier et un couvercle (4), l'orifice d'évent (30) étant agencé dans le couvercle (4) et le bord supérieur de la partie supérieure (54) de la traversée (48) étant pratiquement aligné avec la surface supérieure du couvercle (4).

4. Cellule selon l'une quelconque des revendications précédentes, dans laquelle le bord supérieur de la partie supérieure (54) de la traversée (48) contient au moins une entaille (58).

5. Cellule selon la revendication 4, dans laquelle le bord supérieur de la partie supérieure (54) contient au moins deux entailles espacées (58).

6. Cellule selon l'une quelconque des revendications précédentes, la cellule comprenant un boîtier, une paroi du boîtier définissant un orifice (30) dans lequel est agencée la traversée (48), le contour de la surface externe de la traversée (48) étant similaire au contour de la surface interne de la paroi définissant l'orifice (30), permettant ainsi le logement de la traversée (48) dans l'orifice (30).

7. Cellule selon la revendication 6, dans laquelle le contour de la surface externe de la traversée (48) est plus grand que le contour de la surface interne de la paroi définissant l'orifice (30), de sorte que la traversée (48) est ajustée par frottement dans l'orifice d'évent (30).

8. Cellule selon les revendications 6 ou 7, dans laquelle au moins une partie de la surface interne de la partie supérieure (54) de la traversée (48) a un contour effilé s'étendant vers la partie inférieure (52) de la traversée (48).

9. Cellule selon l'une quelconque des revendications précédentes, dans laquelle la traversée (48) est composée de nylon, de céramique, de polyéthylène, de polypropylène, de polytétrafluoréthylène, d'un copolymère propylène-éthylène fluoré, d'un polymère alkoxyde perfluoré, d'un copolymère éthylène-éthylène fluoré, de verre et/ou d'un métal.

10. Cellule selon l'une quelconque des revendications précédentes, dans laquelle l'élément obturateur (56) est composé de polyéthylène, de polytétrafluoréthylène, d'un propylène-éthylène fluoré, d'un polymère alkoxyde perfluoré. d'un copolymère éthylène-tétrafluoréthylène, de nylon, de polypropylène, de polycarbonate, de polymères acryliques, de métaux, de verre et/ou de céramiques.

11. Cellule selon l'une quelconque des revendications précédentes, dans laquelle un matériau d'étanchéité est déposé sur la surface de jonction entre la traversée (48) et la paroi définissant l'orifice d'évent (30).

12. Cellule selon l'une quelconque des revendications précédentes, dans laquelle un matériau d'étanchéité est agencé sur l'élément obturateur (56).

13. Cellule selon l'une quelconque des revendications précédentes, dans laquelle l'élément obturateur (56) est revêtu d'un matériau chimiquement inerte en ce qui concerne les composants de la cellule.

14. Cellule selon l'une quelconque des revendications précédentes, utilisant un électrolyte cathodique contenant au moins une des oxyhalogénures liquides suivantes: chlorure de thionyle, chlorure de sulfuryle, oxychlorure de phosphore, bromure de thionyle, chlorure de chromyle, tribromure de vanadyle et oxychlorure de sélénium.

15. Cellule selon l'une quelconque des revendications précédentes, dans laquelle l'élément obturateur (56) est composé de verre, la traversée (48) étant composée d'un copolymère éthylène-tétrafluoréthylène.
